# EUROPEAN PATENT SPECIFICATION

(11) **EP 2 775 728 B1**
(45) Date of publication and mention of the grant of the patent: **18.10.2017**
(21) Application number: 14158431.8
(22) Date of filing: 07.03.2014
(51) Int. Cl.: H04N 21/418, H05K 5/02, G06K 7/00, G06K 19/077

(54) **A usb conditional access module comprising a chip card reader and a reception frame**
USB-Bedingungszugangsmodul mit Chipkartenleser und Adapter
Module d'accès conditionnel USB comprenant un lecteur de carte à puce et un adaptateur

(30) Priority: 07.03.2013 US 201361773851 P; 18.04.2013 EP 13164362; 25.07.2013 EP 13177954
(43) Date of publication of application: 10.09.2014
(73) Proprietor: SmarDTV S.A., 1033 Cheseaux-sur-Lausanne (CH)
(72) Inventor: Soulier, Julien, 13600 La Ciotat (FR); Munier, Jean-Christophe, 83740 La Cadière d'Azur (FR)
(74) Representative: Leman Consulting S.A.

(56) References cited:
- EP-A1- 2 420 953
- EP-A2- 2 091 229
- EP-B1- 1 331 601
- WO-A1-2004/100050
- KR-A- 20120 140 127
- KR-U- 20090 010 545
- US-A1- 2004 201 952
- US-A1- 2005 109 841
- US-A1- 2005 247 784
- US-A1- 2006 273 173
- US-A1- 2013 102 170

## Description

### TECHNICAL DOMAIN

The present invention relates to a conditional access module, a conditional access module (CAM) dongle and a converter connector or a reception frame for connecting the conditional access module dongle to a host device. Different embodiments of the adaptor allow for the conditional access module dongle to be connected to host devices having different types of connecting sockets such as PCMCIA, USB or HDMI.

### STATE OF THE ART

A conditional access module (CAM) is known in the state of the art as being a removable module which can be plugged into a host device, such as a digital TV, set-top box or other receiver/decoder, in order to provide capability for decrypting encrypted digital media content. The CAM is a secure device and may be realised in hardware or software or a mix of both. The DVB Common Interface (CI) specification allows for a television receiver or set top box (a host device) to interact with a secure hardware (or software or hardware/software) module (the CAM), thereby allowing the host device to decrypt access-controlled content. The CI specification defines an interface between the host and the CAM, so that the two will work together if both conform to the CI specification. This interoperability confers significant benefits on the CI system, as, in principle, it allows consumers a choice of compatible products from different manufacturers.

Conditional access modules (CAM) known in the state of the art may also have other functions. Thanks to the Common Interface a CAM may also be used to provide alternative connectivity and compatibility. For instance, an offline television that is capable of only receiving terrestrial broadcasts can run an application similar to an Internet Protocol Television (IPTV) if it has a CI input and a CAM with internet connectivity and TCP/IP compatibility. Such use is described in United States Patent Application Publication number 6,045,851 A1 and also in International Patent Application Publication number 2012/29018 A1.

European Patent Application Publication number 1,331,601 B1 describes a known chip card reader adhering to a so-called PCMCIA format. The PCMCIA format defines a standard format and form factor for Common Interface compatible devices such as Common Interface (CI or CI+) Conditional Access Modules (CAM or CICAM). Chip card readers such as the one disclosed in the mentioned publication are commonly used in conditional access modules (CAM) as they allow a convenient way to provide the CAM access to a security module. A security module is a required element in a CAM. Thanks to the CAM having a chip card reader, the security module can be housed on a chip card, therefore allowing for this secure element to be disconnected and kept separately from the main part of the module. This means that conditional access modules (CAM) for use with a Common Interface (CI or CI+) are required to adhere to this PCMCIA format. The chip card reader may be configured to read a chip housed on a smartcard or it may be configured to read a chip on a SIM card. It is generally expected that this standard format and form factor for chip card readers in use today will change in the near future. It is thought that the new form factor will be smaller than PCMCIA and probably will include a USB connector instead of the existing PCMCIA connector for connecting to the host device. Indeed, it may resemble a USB stick. This means that in the future a conditional access module (or CAM) will need to have a format which allows it to be used with a USB interface.

In keeping with this change, host device manufacturers will begin to manufacture devices, such as TVs for example, having a Universal Serial Bus (USB) socket for a conditional access module for example. On the other hand they may prefer to have a High Definition Multimedia Interface (HDMI). By USB it is meant any of the physical connections generally in use for allowing performance the USB communication standard, including USB, mini-USB and micro-USB. Similarly, by HDMI it is meant any of the known HDMI connections as long as it is configured to perform to the HDMI communication standard, including HDMI, mini-HDMI and micro-HDMI.

CAM manufacturers wishing to provide CAMs in one of the new formats (USB CAM or HDMI CAM for example), seeking to maintain the possibility of removing the secure element (the security module described above), will therefore be required to come up with innovative solutions as to how to include a SIM card reader or a Smartcard reader in the new CAM, these two formats being the generally accepted formats for removable secure elements in the CAM domain.

During a certain amount of time while the changeover from the PCMCIA format CAM to the USB or HDMI format CAM is underway, new host devices will be on the market having the new standard of socket (USB or HDMI for example), while existing host devices will still be in use having the old CI or CI+ (PCMCIA format) standard socket. This creates a problem for Pay-TV operators who have to supply conditional access modules to their customers to allow the customers to decrypt their content: which format should they use? The operator would have to plan to stock sufficient volume of USB-type CAMs and sufficient volume of traditional (PCMCIA or Common Interface) CAMs. The functionality of each of the types of CAM will be the same; it is just the interface which would have to be different. The problem is also felt by manufacturers of the conditional access modules, who have to supply modules conforming to the old format and to the new format. This can create inventory problems and the subsequent capital and cash flow problems.

United States Patent Application Publication number 2004/0201952 A1 describes a PCMCIA card converter connector including a PC card having a PCMCIA connector for connecting to a Common Interface card reader of a host device. The other end of the card includes at least one USB socket and the card is configured to convert the USB formatted signals to PCMCIA formatted signals. This would allow a conditional access module having a USB plug to be connected to a host device having a PCMCIA (Common Interface) socket.

Taiwanese Patent Application TWM241733Y shows a similar apparatus to the one above. Again, such a device would provide for a USB CAM to be connected to a host device having a PCMCIA socket.

In order for a television (TV) or Set Top Box (STB) to be able to decode digital content that is encrypted, the Conditional Access Module (CAM) is plugged into the DVB Common Interface (CI) which is usually on the TV or STB. The digital program stream, known as a Transport Stream (TS), from a satellite, cable, terrestrial broadcast, network (internet) or storage device (CD) is received by the TV or STB and routed to come into the CAM and back out to the TV or STB again. If the system works with a smart card (SC), then this smart card plugs into the CAM. The CAM will then enable decrypting of the digital program contents. Note that the TS is a standard DVB data stream containing information about programming material, and also the audio/video data (either in the clear, i.e. no encryption, or in encrypted format) and related data such as teletext or program guide. The video data is usually either MPEG-2, H.264 or MPEG-4 compressed. Recognising that STB systems will come onto the market with USB interfaces, United Kingdom Patent Application Publication number GB 2,442,779 A discloses a method for connecting an accessory to this USB interface which will allow for a CAM to be used with the STB (or TV). This document however does not address all of the problems solved by the present invention since the document rather describes TV sets or STBs which are devoid of any hardware for providing connectivity specifically to a CAM. It is thought that by providing a simple USB interface for receiving a clear TS, the TV or STB can be manufactured cheaper, with the hardware necessary for processing encrypted content being deported outwith the STB/TV since this may be regarded as an optional feature. The accessory disclosed in this document has the further disadvantage that since so much of the decryption-enabling hardware is deported from the STB/TV, any external accessory adapted to perform those functions, connectable to the USB port, cannot receive enough power through the USB port to sustain the function to be achieved. For this reason it is disclosed that the accessory requires an external power supply.

Prior art in the domain of chip card readers includes European Patent Application Publication number 2,420,953 A1 and United States Patent Application Publication number 2005/0,247,748 A1 for example, which both disclose chip card readers having a PCMCIA format and comprising a PCMCIA connector at an end. The chip card readers are configured to be inserted into a slot of a host device which has a Common Interface Standard connector (or PCMCIA connector) at the end of the slot, thereby allowing the chip card reader to be connected to the host device. A manufacturer producing such card readers, wishing to continue to participate in the chip card reader market following the transition whereby host devices comprising Common Interface (or PCMCIA) ports are replaced by host devices comprising USB ports, will either have to add a converter on the end to convert the PCMCIA connector to a USB connector or completely redesign the chip card reader to have a USB connector instead of a PCMCIA connector. If done in an obvious way, this could lead to either a chip card reader having the same physical form of the PCMCIA format chip card reader but with a USB plug on the end to replace the PCMCIA connector or, if it were not considered essential that the chip card reader be inserted into a slot, then the resulting chip card reader could have the form of a "USB key" or any other known device as long as it has a USB plug on the end. Given that during the transition from PCMCIA-compatible hosts to USB-compatible hosts may be a slow one, a manufacturer who adopts a strategy of this type will find himself having to manufacture two types of chip card reader while continually monitoring the needs of the market and consequently adjusting his manufacturing plans in order to minimise waste and to try to simplify stock control, lest he find himself in a disadvantageous position whereby he holds too much stock of one or other type of chip card reader.

Converters exist in neighbouring fields within the prior art, allowing for a peripheral having a first type of connector to be connected to a computer having a second type of connector different from the first type of connector. These converters however do not come in the form of chip card readers. For example, United States Patent Application Publication number 2004/0,201,952 A1 discloses a device known as a PCMCIA card converter connector a PC card casing having a PCMCIA connector on one end and different types of connectors on the opposite end, including at least one USB connector. The PC card is of a shape which allows for at least part of the device to be inserted into a PCMCIA slot of a computer until the PCMCIA connector at the end of the device makes contact with a compatible connector within the computer's PCMCIA slot. The device is therefore a converter connector allowing for peripherals having a USB connector for example, to be connected to the computer via the PCMCIA slot. Using a device such as this effectively brings the computer's PCMCIA connector, which is normally situated towards the internal end of the computer's PCMCIA slot, outside of the slot while converting it to a different format. This allows for peripherals having different types of connector, such as a USB connector, to be plugged into the computer. The chip card manufacturer mentioned in the previous paragraph could therefore find a solution to his problem using a device like this by manufacturing only chip card readers having USB plugs, for consumers to use directly with USB-compatible hosts, while offering PCMCIA card converter connectors of this type, to be used in conjunction with his chip card reader, thereby also satisfying consumers having PCMCIA-compatible hosts. However, given that the chip card reader still has to provide the function of reading a chip card, which may be housed on the long-term industry standard Smartcard, such a solution would be very cumbersome for the consumer who finds himself with a rather large card-reader/chip card combination protruding in an unwieldy fashion from his host device, especially when the host device is of the PCMCIA-compatible type. Furthermore, there still remains a problem of how to chip-card reading functionality while still meeting the all of the goals mentioned above.

### BRIEF SUMMARY OF THE INVENTION

Embodiments of the present invention provide for a CAM having a USB connector. The CAM comprises a dongle (i.e. chip card reader) and a reception frame. One purpose of the reception frame is for holding the dongle and a secure element, the secure element possibly being a SIM card or a Smartcard, in such a way that the dongle will be able to read the chip card. Other purposes of the reception frame are described herein. Various embodiments of the invention described herein allow for the CAM of the invention to be connected to either a "legacy" digital TV or STB having a CI connector or to newer digital TVs or STBs having either a HDMI connector or a USB connector. According to a particular embodiment, the CAM may be of the standard PCMCIA format including the physical dimensions of said format.

As mentioned above, the CAM of the present invention comprises a USB CAM dongle. According to the particular embodiment concerned, the CAM may cooperate with a SIM card or a Smartcard, the SIM card or the Smartcard providing security within the functionality of the CAM, as is already well-known in the state of the art. Alternatively, according to other embodiments, the secure functionality may be included in the USB CAM Dongle itself without the need for cooperating with a separate Smartcard or SIM card, although this is somewhat rare.

According to a first aspect of the present invention a conditional access module (CAM) is provided, the CAM comprising a USB CAM dongle (chip card reader) and a reception frame. According to one embodiment the reception frame serves to receive the dongle and the secure element and further for providing connectivity between the USB CAM (or dongle) and a USB socket of a host device. According to another embodiment the reception frame is for receiving the dongle and the secure element and further for connecting the USB CAM to a Common Interface of a host device, the CAM having a format compatible with the PCMCIA format including its physical dimensions. In this embodiment the reception frame also comprises a module, preferably a hardware module or a combined hardware and software module for converting USB-compatible signals to CI-compatible signals. This part of the module may be referred to as an adaptor. The mentioned converter module, or adaptor, therefore forms part of the CAM of the invention, preferably within the reception frame and in the form of an integrated circuit in order for the module to fit within the physical dimensions of the reception frame. According to different embodiments the CAM may be configured to receive and read a Smartcard or to receive and read a SIM card. According to the first aspect of the invention, provision is made for a conditional access module for providing secure access to conditional access digital media content when connected to a suitable host device, the conditional access module being connectable to the host device via an elongated slot in the host device, the slot having an open end and a closed end, the conditional access module comprising:
a host interface plug at a first end for connecting to a corresponding interface socket located at the closed end of the elongated slot in the host device, the host interface plug being compatible with a first communication protocol; and
a chip card reader configured to read a removable secure element in order to authorise said secure access;
the conditional access module being so dimensioned as to allow it to be inserted into the elongated slot of the host device;
characterised in that:
the chip card reader comprises a plug of a second type, the plug of the second type being compatible with a second communication protocol different from the first communication protocol; and
the conditional access module further comprises a reception frame configured to receive and at least partially enclose the chip card reader and the removable security element, the reception frame comprising:
   a socket of a second type to receive the plug of the second type comprised in the chip card reader; and
   a conversion module to convert the signals from the plug of the second type to a format compatible with the first communication protocol, thereby providing signals to the host interface plug in a manner which is compatible with the first communication protocol;
said host interface plug being part of the reception frame.

According to another aspect of the present invention, there is provided a reception frame for connecting a module to a host device. According to one embodiment the reception frame allows for the module to be connected to a host device having a PCMCIA slot with a Common Interface socket. Such a reception frame preferably comprises a converter module for converting USB-compatible signals to CI-compatible signals. According to another embodiment the reception frame allows for the module to be connected to a host device having a USB socket. By USB socket it is meant a standard sized USB socket, a mini USB socket or a micro-USB socket. This embodiment of the reception frame does not require a converter module as described above since USB-compatible signals are already available and can be therefore routed straight to the USB socket. According to different embodiments the reception frame may be configured to receive a Smartcard or to receive a SIM card. Accordingly, there is provided a reception frame for receiving a chip card reader of the present invention and for holding a removable secure element for the chip card reader of the present invention.

According to yet another aspect of the present invention, provision is made for a chip card reader having a USB connector plug, the chip card reader being compatible with a reception frame of the present invention.

Given the fact that the Common Interface and the USB interface will coexist in the domain of Pay-TV content delivery (by "coexist" it means some sets will have a CI type interface while others will have a USB or HDMI or other interface newer than the CI type interface) and given that many different business models are in use by Pay-TV operators, leading to many different requirements regarding the use of SIM cards or Smartcards, the present invention allows for CAM manufacturers to provide a cost-effective solution for making CAMs available for all the different business models and implementation systems.

With embodiments of the present invention, a manufacturer of conditional access modules which use chip card readers, wishing to supply a market wherein host devices are transitioning from having PCMCIA-format connectors to USB-format connectors, will be able to satisfy the market in a cost-efficient manner by providing conditional access modules comprising a chip card reader according to a first aspect of the present invention, the chip card reader having a USB plug at an end, and further providing for a choice of reception frames according to different embodiments of another aspect of the present invention. For a particular consumer, the goal will be met with a conditional access module comprising the chip card reader and one of the reception frames described herein.

Provision is made for a chip card reader for use in the conditional access module described above, the chip card reader configured to read a removable secure element in order to authorise secure access to conditional access digital media content, the chip card reader being so dimensioned as to allow it to be inserted into an elongated slot of a host device, the chip card reader characterised in that it comprises a plug of a second type, the plug of the second type being compatible with a second communication protocol different from the first communication protocol.

According to an embodiment, the chip card reader chip card reader is further configured to be electrically connected to the conditional access module.

Provision is also made for a reception frame for use in the conditional access module described above, the reception frame configured to receive and at least partially enclose the chip card reader described above and a removable security element, the reception frame comprising:
a host interface plug at a first end, the host interface plug being compatible with a first communication protocol;
a socket of a second type to receive a plug of the second type comprised in the chip card reader; and
a conversion module to convert signals from the plug of the second type to a format compatible with the first communication protocol;
wherein the reception frame has an elongated form allowing the reception frame to be received in an elongated slot of a host device, the elongated slot having an open end and a closed end, the reception frame being configured such that the host interface plug is connectable to a compatible socket at the closed end of the elongated slot of the host device.

According to one embodiment, the reception frame has an elongated body having exterior dimensions suitable for the frame to be at least partly inserted into a PCMCIA slot, and comprises an adaptor having a PCMCIA plug at a first end, coincident with the first end of the conditional access module and a USB socket part of the way along the body of the reception frame such that the chip card reader, when connected to the adaptor, is held within the body of the reception frame. According to an aspect therefore, provision is made for a conditional access module according to one of the above described embodiments, wherein the reception frame is of elongated format and the socket compatible with USB lies part way along the length of the reception frame.

According to another embodiment, the reception frame is configured to receive the chip card reader and to hold the removable secure element in place so that it may be read by the chip card reader. The reception frame has an elongated form wherein at least the sides of the chip card reader are enclosed by the reception frame and the USB plug of the chip card reader is available for connection to the host device.

According to various embodiments of the conditional access module, further embodiments derived from the two embodiments of reception frames mentioned above allow for different embodiments of chip card readers to be used depending on which type of removable secure element is to be used and how the particular embodiment of chip card reader is configured to be able to read the removable secure element.

### BRIEF DESCRIPTION OF THE DRAWINGS

The present invention will be better understood thanks to the detailed description which follows and the accompanying drawings, which are given as nonlimiting examples of embodiments of the invention, namely:
Fig. 1, showing a CAM according to an embodiment of a first aspect of the present invention, the CAM comprising a USB CAM dongle (chip card reader) according to an embodiment of another aspect of the present invention cooperating with a reception frame according to an embodiment of yet another aspect of the present invention;
Fig. 2, showing a CAM according to another embodiment of the present invention;
Fig. 3, showing another view of the CAM of Fig. 2;
Fig. 4, showing a CAM according to yet another embodiment of the present invention;
Fig. 5, showing a view of the CAM of Fig. 4 where certain elements from within the CAM have been made apparent
Fig. 6, showing another view of the CAM of Fig. 4, where again certain elements from within the CAM have been made apparent;
Fig. 7, showing a CAM according to still another embodiment of the present invention;
Fig. 8, showing another view of the CAM of Fig. 7;
Fig. 9, showing a view of the CAM shown in Fig. 8, where at least part of the inside of the USB CAM dongle (another aspect of the present invention) has been made apparent;
Fig. 10, showing a view of the CAM the CAM of Fig. 7, wherein a smartcard has been inserted into an appropriate front opening in the CAM;
Fig. 11, showing another view of Fig. 10;
Fig. 12 shows a Dongle according to a yet further embodiment of the first aspect of the present invention;
Fig. 13, showing another view of the CAM shown in Fig. 12, where the at least part of the inside of the CAM has been made apparent;
Fig. 14, showing an embodiment of a USB CAM dongle according to another aspect of the present invention, in which the bottom cover has been removed thereby revealing elements within the dongle;
Fig. 15, showing the bottom cover of the USB CAM dongle of Fig. 14, wherein a SIM card can be seen;
Fig. 16, where the bottom cover of the USB CAM dongle of Fig. 14 shows a recess for holding a SIM card; and
Fig. 17, showing the top cover of the USB CAM dongle of Fig. 14.
Fig. 18, showing a CAM according to a yet still further embodiment of the first aspect of the present invention, the CAM having a smartcard inserted.
Fig. 19, showing the CAM and smartcard of Fig. 18 viewed from a different angle, thereby allowing the bottom cover of the reception frame to be seen.

### DETAILED DESCRIPTION

The present invention provides a solution to some of the problems which will become apparent when manufacturers of host devices such as television sets will provide new sockets complying with a standard such as USB or HDMI for receiving modules such as conditional access modules (CAM) instead of the present socket complying with the common interface standard, suitable for receiving a PCMCIA format card for the conditional access module. Indeed, once such host devices having the new sockets appear on the market, suppliers and manufacturers will be left with the problem of having to satisfy demand both for modules within a housing having a connector conforming to the old standard (i.e. a PCMCIA format card with a Common Interface) and for modules within a housing having a connector conforming to a new standard, such as USB or HDMI, since host devices having the old and the new sockets will be deployed concurrently in the market and/or user-base.

Additionally, depending on particular systems employed by Pay-TV operators, an operator who requires that a Smartcard cooperating with a CAM be used in systems employing the present-day Common Interface may continue to require that a Smartcard still be used even when the system employs a USB interface. On the other hand, some operators may need SIM card compatibility in their CAMs instead of Smartcard compatibility. It will therefore be required to maintain all of these options concurrently in order to satisfy all of the users' needs. Smartcards and SIM cards are two generally accepted means of providing removable security modules in the domain of conditional access. Removable security modules are also known as removable secure elements.

Modules such as conditional access modules are high-value products and therefore having to provide all possible types of devices capable of interfacing a particular type of CAM to the host device, whether it be the USB or HDMI type or the PCMCIA/CI type, in sufficient quantities would be wasteful in terms of cost. It is thought that host manufacturers may soon provide host devices with sockets for modules, such modules requiring to be compatible with the USB standard. For a pay-TV operator, who has to provide appropriate modules to allow his customers to access his content, to have to stock large quantities of types of modules would be wasteful since the modules have a high cost. A similar problem would be felt by manufacturers of such modules. Complications related to stock control for the various modules implied will further manifest themselves.

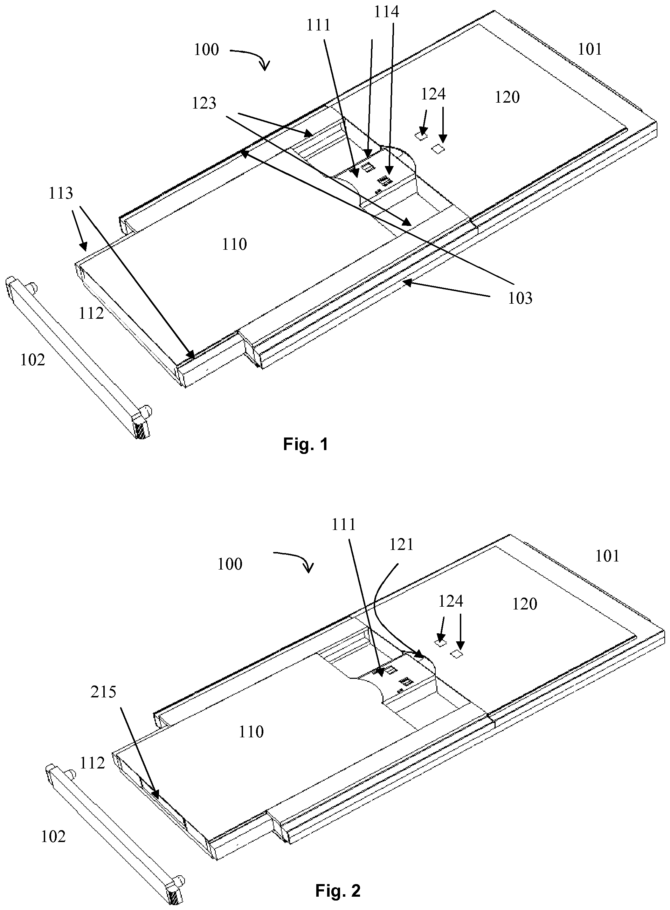

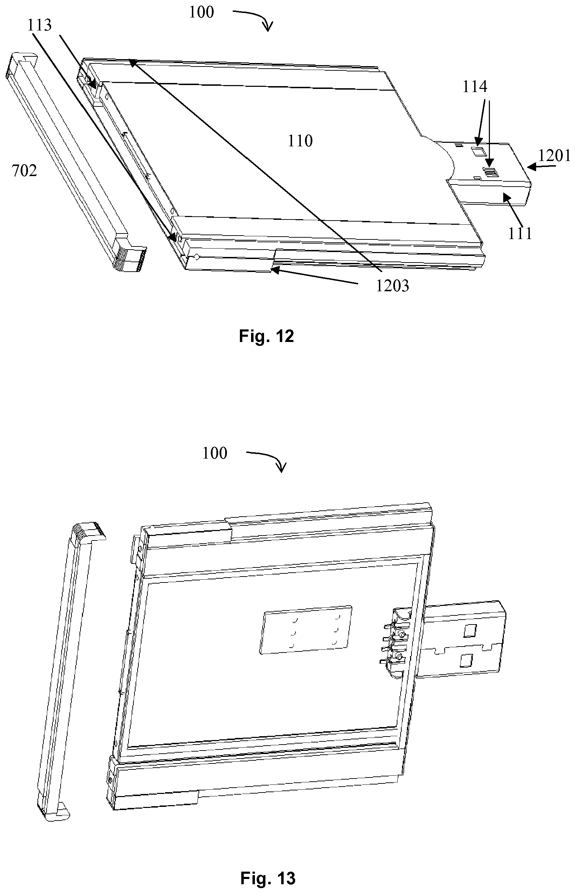

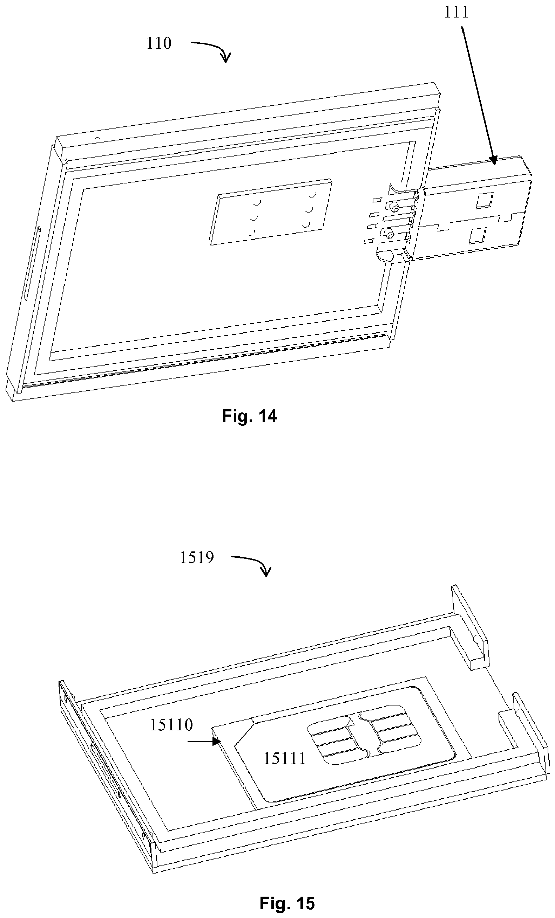

The present invention allows for a manufacturer of CAM modules, or an operator who has to provide CAM modules to his customers, to provide CAM modules presenting the appropriate form factor and connection plug for any of the available host devices whether they be configured to receive Common Interface (or CI+) modules or a new format such as USB or HDMI. Such CAM modules are illustrated in Figs 1, 2, 3, 4, 7, 10 and 11 as well as in Figs 12, 13, 18 and 19. The module comprises a USB CAM dongle and a reception frame. A USB CAM dongle is shown in Fig. 14. USB CAM dongles are also visible in Figs 1, 2, 4, 6, 7, 8, 9, 12 and 13. Reception frames can also be seen in Figs 1, 2, 4, 6, 7, 8, 9, 12 and 13. According to an aspect of the present invention, a USB CAM dongle is provided (110, 710) wherein the USB CAM dongle comprises a USB connector (111). This may be a standard USB connector, a mini USB connector or a micro USB connector, as long as it provides connectivity to a USB socket of a host device with which it is to cooperate.

According to another aspect of the present invention and one embodiment thereof, there is provided a reception frame to allow the dongle described above to be connected to a host device adapted to receive a Common Interface compatible module of the PCMCIA format. This is illustrated in Figs 1, 2, 4, 6, 7, 8, and 9. According to another embodiment thereof, there is provided a reception frame to allow the module described above to be connected to a host device adapted to receive a module having a USB interface. This is illustrated in Figs 12 and 13.

The reception frames according to the present invention are of low cost compared to the USB CAM dongles. Stocking of sufficient quantities each of the different embodiments of the reception frame in order to cover expected customer demand therefore is not a problem from a cost point of view or from a planning point of view. Only one type of dongle has to be stocked since, when deployed within the CAM according to embodiments of the present invention, it is compatible with hosts having Common Interface or CI+ connectors or other connectors such as USB or HDMI. Since this is where the bulk of the cost lies, less waste ensues.

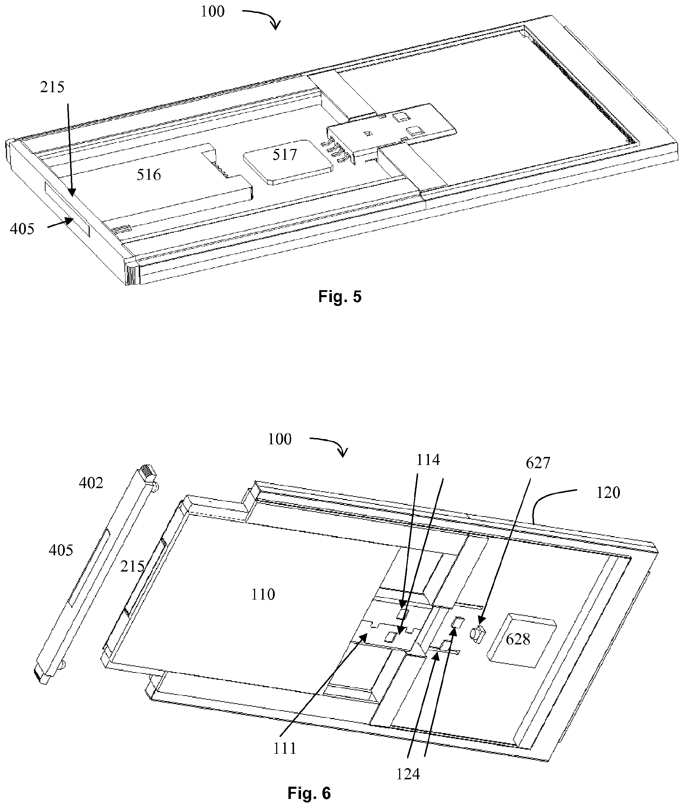

Reception frames according to the embodiments of the present invention illustrated in Figs. 1 through 11 require to be fitted with an electronic circuit configured to convert USB compatible signals to the Common Interface format. A small chip is useful for this, the chip comprising the necessary signal conversion function, which is simple to design and which may be manufactured cheaply. This does not add a lot to the cost of the reception frame. The aforementioned conversion circuit is preferably housed on a PCB board of the CAM in a convenient part of the reception frame, such as a part lying between the part where the USB CAM dongle resides and the part which connects to the Common Interface. The reception frames of Figs. 12, 13, 18 and 19 do not require a chip or any other active circuitry specifically for conversion of the interface connections from one standard to another as the USB connections are simply wired to the corresponding part of the USB plug. One such conversion chip (628) can be seen in Fig. 6.

According to one embodiment, where the reception frame comprises USB to CI conversion, such as any of those represented in Figs. 1 through 11, a switch (627) may be comprised within the reception frame (120). The switch (627) is configured to provide a signal indicating the presence of a USB CAM dongle (110) within the CAM (100). For mechanical stability of the dongle when connected to the reception frame, spring clips may be provided on the reception frame, which cooperate with corresponding holes or recesses on the USB plug of the dongle. Alternatively the clips may be on the reception frame while the recesses are on the USB plug of the dongle. The recesses or clips (326, 124) may appear on either or both of the top face or the bottom face of the reception frame (120, 120). Spring clips (124) and recesses (114) are shown in Fig. 1 and can also be seen under corresponding numbers in Figs. 2 through 11.

According to other embodiments, any of the reception frames of the present invention may be configured to receive a memory card such as or an SD card or a mini SD card or a micro SD card allowing for a user to have storage space for recording content for example or for storing personal data such as identifiers or codes or personal preferences and/or settings or viewing history or any such information which is deemed to be non-secure. This SD card (or mini- or micro- SD card) may be over and above any SD card used as a security module.

The USB CAM dongle of the present invention must be small enough to allow it to fit completely within the outer dimensions of any of the reception frames of the present invention. This avoids mechanical problems caused by the module sticking out from the host device in an awkward manner where it may be prone to damage from someone passing by and brushing against it or otherwise coming too close to it. In the case of the PCMCIA compatible reception frame, the module preferably fits within the outer dimensions of the reception frame such that the CAM according to one embodiment of the present invention therefore fits properly into the reception channel (or slot) on the host device designed for this purpose. The CAM of the present invention, including the USB CAM dongle and the reception frame can be at least partially inserted, preferably completely inserted, into the host's card reader reception channel in the same way that a traditional conditional access module would fit. As is generally known in the state of the art, the CAM conforms to the PCMCIA specified dimensions. Guide rails (103) on the sides of the reception frame may be useful in guiding the CAM into the slot in the host.

According to another embodiment, where the reception frame is compatible with USB, an extension cable may be provided between the USB plug on the module and the socket on the host so that the module can be placed out of harm's way, on a table for example, and only the connector to the USB socket and part of the extension cable protrude from the host rather than having the entire module sticking out of the host. Instead of being inserted on a horizontal direction into the host device, as is often the case for PCMCIA format modules, the CAM may be inserted in a vertical direction into the host, preferably in a downward direction. This relieves some of the mechanical forces which would present disadvantageous characteristics should a USB compatible module be inserted in the horizontal direction into the host device.

Embodiments of the present invention exist where, instead of a USB plug being provided, a HDMI plug or a FireWire plug or a SATA plug or a PCI plug is provided in order to be compliant should the new standard for host devices be any of those standards.

From a mechanical point of view, in order to provide adequate strength of the connection, the reception frame can be locked into the reader when it is being used and released during an ejection procedure when the module is to be no longer used.

Power to the CAM is provided from the host device and arrives through the interface (101, 1201) between the host and the CAM. According to the Common Interface specification, a host device should be able to supply up to 1.5W of power to a Common Interface module. On the other hand, according to the USB specification, a host device should be able to supply up to 2.5W of power to an attached module. According to embodiments of the present invention, the USB CAM dongle (which comprises the bulk of the conditional access module functionality) is configured to provide all essential conditional access features while drawing from its host no more than the specified maximum power of a Common Interface i.e. 1.5W. In this manner, all essential features for which a CAM is intended can be accomplished whether the USB CAM dongle is co-operating with either a USB reception frame or a CI reception frame. According to an embodiment of the present invention, the USB CAM dongle is configured to detect whether it is connected to a USB host or a Common Interface host and to provide access to a mode of operation which may require more than the specified maximum power deliverable by a Common Interface and up to the specified maximum power deliverable by a USB interface. In this manner the CAM may take full advantage of being able to use more power whenever it is allowable. More features may then be accessible when the CAM is plugged into a USB host. The switch (627) present in the reception frame for connection to a Common Interface host may be used to provide information to the USB CAM dongle as to which type of reception frame is being used. This allows for a USB CAM dongle to detect whether it is connected to a USB host or a Common Interface host and to set its mode of operation accordingly.

Suppliers of CAMs, benefiting from the present invention, will manufacture only USB CAM dongles having any of a standard, a mini or a micro USB plug at a first end of the dongle and matching reception frames. The reception frame, according to the particular embodiment, has either a USB socket for cooperating with the USB plug of the dongle or is configured to allow the dongle's own USB plug to be inserted straight into a host's USB socket. The reception frame with the USB socket further comprises at one end a common interface plug for cooperating with a Common Interface on a host device. Similarly, operators need only buy one type of module (USB CAM dongle) and the two types of reception frames and then supply the appropriate type of reception frame to their clients depending on whether they have a host with a CI interface or a USB interface. The same module will be used for clients using the new standard of host interface and the old standard. A customer who buys the new module will only have to change reception frames when he changes his host from USB type to Common Interface type or vice versa. The CAM therefore has a host interface plug which can be a USB plug or a Common Interface plug depending on which reception frame is used. The CAM's host interface is therefore the reception frame's Common Interface plug in one case and the chip card reader's USB plug in the other case.

Thanks to various embodiments of the present invention, CAM manufacturers need not build several different types of CAM to satisfy the old market, where hosts had all Common Interfaces for CAMs, while at the same time satisfying the new market where hosts will have USB sockets for the CAM. The CAM manufacturer just needs to make USB CAM dongles according to the present invention and different types of reception frames: one for the Common Interface and one for the USB interface. The reception frames are cheap whereas the USB CAM dongle comprises the expensive element. It is therefore advantageous that the manufacturer only has to make one type of USB CAM dongle for all the embodiments of CAM of the present invention regardless of which embodiment of reception frame of the present invention is used.

The USB CAM dongle has a USB connector at one end. It may have a SIM card inside, preferably housed within a cover of the dongle, in a suitable recess, where contact to the SIM card is made through suitable connections on the PCB of the dongle. The dongle has two such covers, a top one and a bottom one, preferably one made from metal and the other made from plastic, both of which cooperate with a plastic frame which houses the PCB board of the dongle. According to embodiments of the present invention it is the top cover which is metal and the bottom cover plastic. The SIM card mentioned above may be lodged in the plastic cover. Alternatively the dongle may be used without the plastic cover of the mentioned covers and the connections will be therefore available for making contact with a Smartcard suitably inserted into the CAM to be able to have the pads of its chip make contact with said connections. The connections make contact with the pads of the chip of the Smartcard in order to allow the Smartcard reader to read the chip of the Smartcard. This is otherwise known as reading the Smartcard. The connections of the Smartcard reader can thus be said to be for reading the Smartcard. The same can be said for a SIM Card reader having connections for reading a SIM Card. The dongle cooperates with a reception frame. The metal of the top cover is up 0.2mm thick in order to fit in the reception frame (0.18mm according to some embodiments). The covers latch at the front and back to the plastic frame, preferably in grooves. See Figs. 15, 16 and 17. The CAM, including the dongle and the reception frame, preferably has dimensions of around 66.5mm length, 39mm width and 5mm height in order to comply with the PCMCIA standard. The dongle itself preferably has a height of up to 4.8mm.

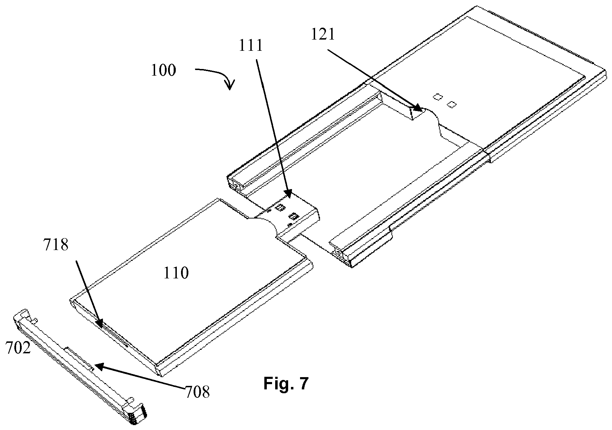

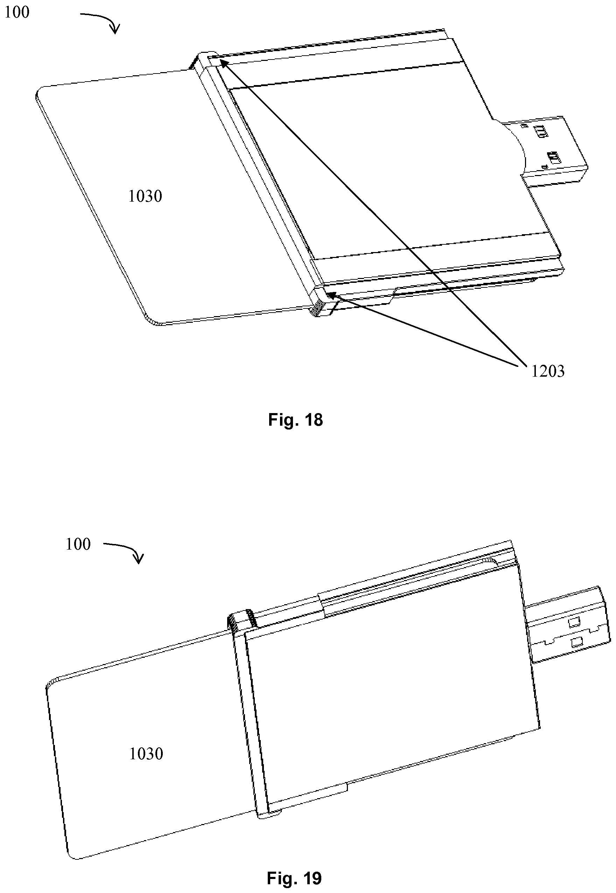

The reception frame has a metal top cover and a metal bottom cover at least over part of its length. The bottom cover may cover the full length of the reception frame (corresponding to the full length of the CAM as shown in Fig. 7 and in Fig. 19) while the top cover may cover only a part of the length of the reception frame. The covers are made of metal to provide electromagnetic shielding to the electronics within and to allow the CAM to comply with the maximum required thickness according to the PCMCIA format. When the top cover of the reception frame only covers part of the length of the CAM (reception frame) the shielding effect is complemented by the top cover of the dongle when it is connected to the reception frame (see Fig. 7). A PC-Card Type II complying with this standard has to be 100mm long by 55.2mm wide by 5mm thick. This means that the CAM has to comply with this standard. Since the dongle can have a thickness of up to 4.8mm, this dictates the maximum thickness of the metal bottom case of the reception frame since the thickness of the reception frame and the dongle together has to be within the 5mm specified limit. The metal case of the reception frame therefore has to be a maximum of 0.2mm thick. See Fig. 7: with a bottom case of the reception frame of up to 0.2mm thick and the height of the dongle being 4.8mm maximum, the maximum thickness of the CAM is respected. The reception frame further comprises two plastic spacers on either side, the spacers also functioning as sliders to guide the USB CAM, which can be slid in from the front end before being held and locked in from the front by a plastic end-cover (or front cover (102, 402, 702)) which forms another part of the reception frame.

According to the present invention, the dongle, being the cost-intensive part of the CAM, is the same for all different embodiments. The dongle has a maximum height of about 4.8mm. This leaves up to 0.2mm for the thickness of the metal bottom cover of the reception frame. When the CAM is to be used with a smartcard, the front cover of the reception frame is configured with an opening for receiving the smartcard. The front part of the extension region (see later) of the CAM (and therefore of the reception frame) has a set of lateral guides to guide the card through the CAM. The card is therefore guided by the lateral guides and the bottom cover of the reception frame. The dongle is used without its plastic bottom cover. Since the bottom cover of the reception frame has a thickness which is approximately the height of a standard smartcard this leaves enough space for the smartcard to slide between the dongle and the bottom cover of the reception frame. When the CAM is to be used with a SIM card, the SIM card may lie in a recess in the bottom cover of the dongle; the dongle is used with its bottom cover in place and so the SIM card can connect with the pads on the card reader on the PCB board of the dongle in the same way as the contacts of the Smartcard's chip would have been contacted. The CAM can also be used with a SIM card slid through the front of the dongle when the front cover has a hole for the SIM card and the dongle has a corresponding recess for the SIM card reader. In this case the dongle is also used with the bottom cover thereby complying with the height requirement of the CAM.

According to one embodiment of reception frame, it comprises a socket to receive the USB CAM dongle's USB plug and it further comprises a spring clip in its metal cover to cooperate with the USB plug and snap into place. A switch on the PCB detects when the dongle is inserted into the reception frame. The back end of the reception frame has a connector for connecting to a host's Common Interface connector. The bottom case of the reception frame covers the entire length of the reception frame while the metal top case covers from the back end to the part where the dongle's USB plug fits into the reception frame's USB socket. In this way proper shielding is maintained at the bottom thanks to the bottom case of the reception frame and at the top thanks to a combination of the metal top case of the reception frame and the metal top case of the dongle.

According to another embodiment of the reception frame, the back end is left open so that the dongle's USB plug can cooperate with the USB socket of a host device. This reception frame has the plastic guides at the side as above and the plastic front end cover to lock the dongle in place. This embodiment has no converter circuit.

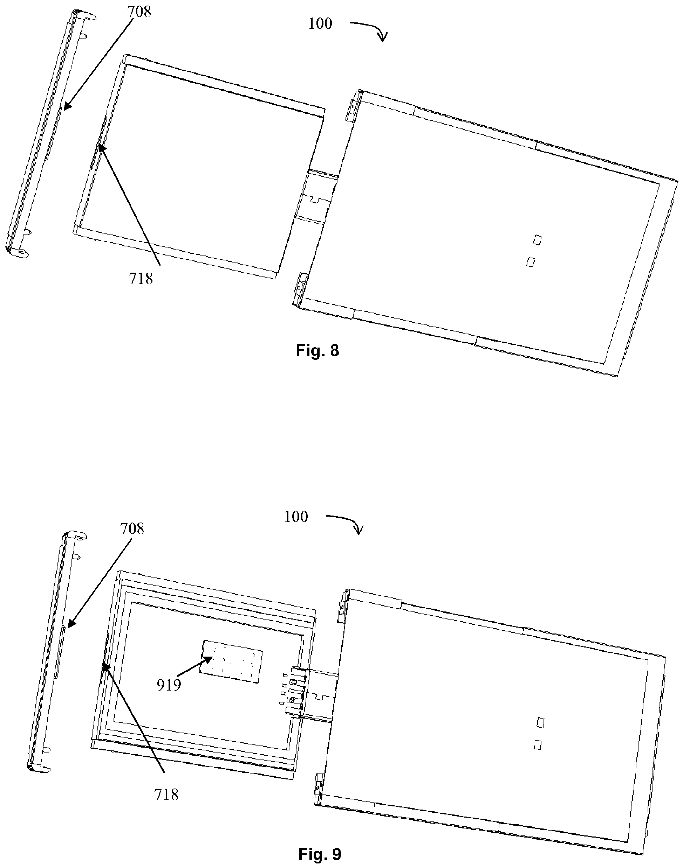

Different embodiments of the above two types of reception frame are made possible by the present invention. In one embodiment, where a Smartcard needs to be used as part of the conditional access system in use, the front end cover has an opening through which the Smartcard can enter. The Smartcard is guided into the CAM and under the PCB of the dongle, which is used without its bottom cover, so that the pads of the chip on the Smartcard can connect to the connections on the underside of the PCB of the dongle. The guiding is provided by two metal guides which go around the sides of the CAM housing. The guides are a continuation of the reception frame's bottom case, which are bent around and fit into the plastic spacers. These guides are slightly wider than the width of the CAM and are only at the front end. This way the edges of the Smartcard are flush with the edges of the module, which is open except for this area just at the front end. See Figs. 8, 9, 10, 11, 12, 13, 18 and 19. Embodiments of the CAM which are to be used with smartcards require that there be a front opening of adequate height to allow the smartcard to be introduced. The opening is formed between the bottom cover of the reception frame and the bottom face of the dongle. The dongle is used without its bottom cover so that contact may between the pads of the chip on smartcard and the corresponding pads on the chip card reader of the CAM (i.e. on the USB CAM dongle). In order to keep this opening open it is necessary to hold the bottom cover of the reception frame and the bottom face of the dongle apart in the z-direction (vertical direction in Fig. 7 for example). This is done by arranging for the front end cover (102) of the CAM (100) (also serving as a front end cover of the reception frame) to have a tongue (708) which cooperates with a corresponding groove (718) in the USB CAM dongle (110). Tongues and grooves for ensuring the presence of an opening suitable for the smartcard are also shown in Figs. 8, 9, 12, 13, and 14.

When a CAM is to be used with a smartcard, the thickness of the dongle needs to be less than 4.8mm. Indeed the thickness of the dongle needs to be such that when the dongle is held in its vertical (z) position by the tongue and groove configuration on the front end cover of the reception frame and the dongle, enough space remains between the dongle and the bottom case of the reception frame to allow for the smartcard to be inserted.

Embodiments of reception frame which are not required to cooperate with a Smartcard have a simple end cover without the opening for a Smartcard and without the special metal guides requiring a wider front end and leaving a space where the edges of the Smartcard are flush with the edges of the CAM as described above. Instead this embodiment has a solid front cover and the width of the entire module may be constant. See Figs 1 to 6. Other embodiments may have the simple end cover but still keep the CAM dimensions of the embodiments suitable for use with Smartcards, with the wider front end or so-called extended region. Yet other embodiments may have the front cover suitable for use with a Smartcard: a Smartcard can then be used as described above i.e. without the bottom cover of the dongle; whenever a SIM card is to be used instead of the Smartcard the dongle is used with its bottom cover, the SIM card is placed in the bottom cover of the dongle and the extra height of the bottom cover compensates for the space which would have been left had the CAM been used with a Smartcard.

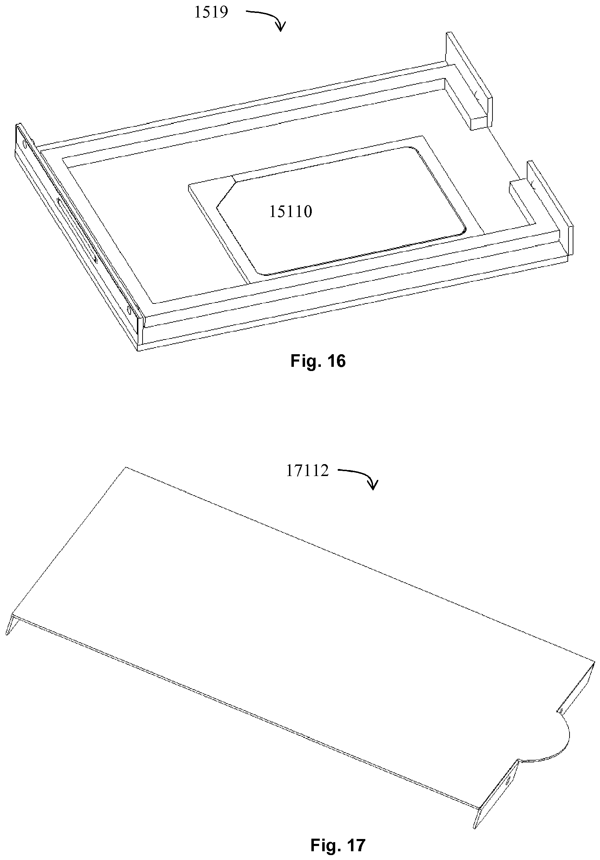

For embodiments which do not cooperate with smartcards, various configurations are possible and are shown in the drawings as follows: Fig.1 shows a CAM having a USB CAM dongle and a reception frame for connection to a host having a CI type of interface. The CAM is configured to work with a SIM card and the SIM card is housed in the bottom cover of the dongle. Fig. 15 shows a bottom cover of a dongle with a SIM card installed. Fig. 16 shows a recess in the bottom cover of a dongle for receiving a SIM card. Fig. 14 shows a dongle with its bottom cover removed so that the contacts for the SIM card are shown. The front cover of the CAM shown in Fig. 1, also functioning as a front cover of the dongle, serves to close the CAM and hold the dongle in place. It may be made from plastic and may be clipped or otherwise locked into place. The front cover in this embodiment does not need a tongue since no smartcard is to be used and it does not need any holes for receiving a SIM card since the SIM card is housed in the bottom case of the dongle.

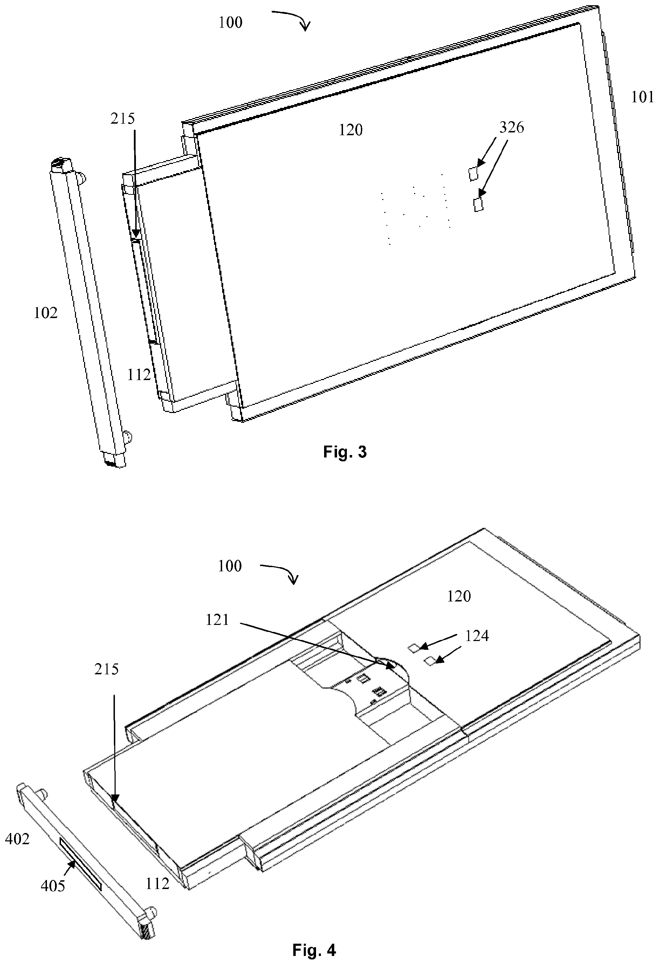

Fig. 2 is similar to Fig. 1 except that it has a hole at the front of the dongle for receiving a SIM card or an SD card. In this case it is not necessary for the dongle to be fitted with a SIM card in its bottom case since the SIM card is inserted into the front end of the dongle. On the other hand, both a SIM card and an SD card can be used, in which case one will be inserted into the front of the dongle while the other will be housed in the bottom case of the dongle. Fig. 3 shows another view of the CAM of Fig. 2.

Fig. 4 is similar to Fig. 2 in that it is adapted to receive a SIM card or SD card into the front end of the dongle. The difference in this case is that the front cover also comprises a hole corresponding to the hole in the dongle so that the SIM card or SD card can be inserted even after the CAM has been closed using the front cover. Figs. 5 and 6 show other views of this type of CAM.

Figs 7, 8, 9, 10, 11, 12, 13, 18 and 19 show CAMs which are adapted to receive smartcards and so have the tongue and groove configuration mentioned above. The front portion of these CAMs, known in the state of the art as the extended portion, may be wider than the smartcard and comprise guides to guide the smartcard into the CAM. The rest of the CAM is of the same width as the Smartcard and is devoid of guides such that the edges of the smartcard, when inserted, lie flush with the edges of the CAM. This necessary since the width of the slot in the host device, destined to receive the CAM is specified to have the same width as the smartcard. The extended portion may therefore extend outside of the slot when the CAM is in use.

Thanks to various embodiments of the present invention, Pay-TV operators who were using Smartcards to provide the secure component of their conditional access system will be able to continue using the Smartcard when the host device manufacturers change to USB interfaces instead of Common Interfaces, while still remaining compatible with the Common Interface. To this end, there is provided the USB CAM dongle of the present invention and one of the reception frames of the present invention. The reception frame which has an opening in its front end (between the dongle and the reception frame bottom cover) is used with a USB CAM dongle of the present invention, where the bottom plastic cover of the dongle is removed to allow contact to be made between the Smartcard's chip's pads to the dongle. According to different embodiments, the CAM thus described can be connected to a host with a USB socket, where the dongle's USB plug goes directly to the host's socket, or the CAM can be connected to a host having a Common Interface, where the reception frame further comprises a USB socket to receive the dongle's plug, a circuit for converting the USB signals to CI compatible signals and a CI connector at the back. Operators who do not need Smartcards to be used are also able to benefit from the present invention using the embodiment of the reception frame with a solid front end cover and a SIM card housed within the bottom cover of the dongle or with a hole in the front cover for receiving a SIM card.

Manufacturers of CAMs provide CAMs comprising a chip card reader (also described in all of the above embodiments of the present invention as a USB CAM dongle) and a reception frame. The dongle comprises a USB connector and can be used with a SIM card or with a Smartcard as removable secure element thanks to the different possibilities with or without the dongle's plastic bottom cover. The reception frame is cheap and may be of a type which converts the USB signals to Common Interface signals or of a type which does not convert the USB signals in which case the dongle's USB connector is connected directly to the host. Both reception frames may be made available with or without a slot (405) at the front end cover for receiving a SIM card. On the other hand, in order to reduce the number of different reception frames all of them could have the slot and the slot would remain unused whenever it was not necessary to read SIM cards. Similarly, in order to limit the number of different types of reception frames and chip card readers, the reception frame may always have a tongue (708) and the chip card reader (dongle) may always have a corresponding groove (718) so that whenever the conditional access module is to be used with a smartcard and the dongle therefore used without its bottom cover, the dongle is held properly in place in the z-plane so that enough space is available between the CAM bottom cover and the bottom of the chip card reader for the smartcard to be inserted. When the CAM is to be used with a SIM card, either housed in the chip card reader's bottom cover or inserted through a slot in the front end of the reader, then the presence of the tongue and groove, although no longer necessary for holding the dongle in the z-plane, does not interfere with the operation of the module. In this manner, manufacturers would only be required to make one type of chip card reader and two types of reception frame to allow their end users to have a conditional access module for either a host having a Common Interface or a host having a USB interface.

In any of the embodiments of the present invention described above whose chip card reader is a SIM card reader, the chip card reader has a plug of a certain type. This plug could be a USB plug. A known USB plug is a USB 2.0 Type A male connector. Other known USB plugs include a USB 3.0 Type A male connector. Either of these known plugs may be used. Such connectors comprise two parts: a grid or part of a PCB board having the four tracks for conveying the signals defined by the USB protocol, and a shielding part which surrounds the grid and also provides mechanical stability for elements connected thereto. The shielding part can be seen in Figs 1, 2, 4, 6, 7, 8, 9, 12, 13, 14, 18 and 19. One function of the shielding part is to provide shielding from electromagnetic interference with the connections that it surrounds. The grid part is not visible in these drawings. Standard USB 2.0 and 3.0 male connectors of this type generally have a height of between around 4.5mm and 4.7mm. The grid part on its own, without the shielding part, generally has a height of around 1.8mm. The metal casing (covers) of a conditional access module generally can be made to have a thickness of around 0.2mm. The left and right sides (laterally) of a standard CAM are generally of a smaller height than that at the middle. By laterally it means the sides along which the guard rails run. The height at these sides may be around 3mm, whereas the height at the middle is around 5mm. The chip card reader of the present invention will therefore be narrow (laterally) than the conditional access module (i.e. narrower than the reception frame) and shorter in length (longitudinal direction). In this manner the chip card reader can be almost as thick as the conditional access module as it occupies the thickest part when inserted into the reception frame. The standard USB plug, being 4.7mm in height, will also fit within the height of the conditional access module.

The interface socket, which is on the reception frame in embodiments where the plug of the USB plug is to be received in the reception frame, may not be a standard female USB Type A socket since these sockets have a height of more than 5mm. Instead, the interface socket may be made using just the grid part of the standard female socket. According to other embodiments, any suitable socket for receiving the standard male USB Type A plug may be used as long as it fits within the height constraint of the conditional access module. A spring contact connection may be used for example. Since the shielding part is absent from the socket, it is the metal casing (covers) of the conditional access module which provide shielding from electromagnetic interference around this connection. To provide suitable friction between the plug and socket here the casing (cover) of the conditional access module (at the reception frame) may be stamped in order to provide protuberances (124) which will fit into recesses (114) of the shielding part of the USB plug (111).

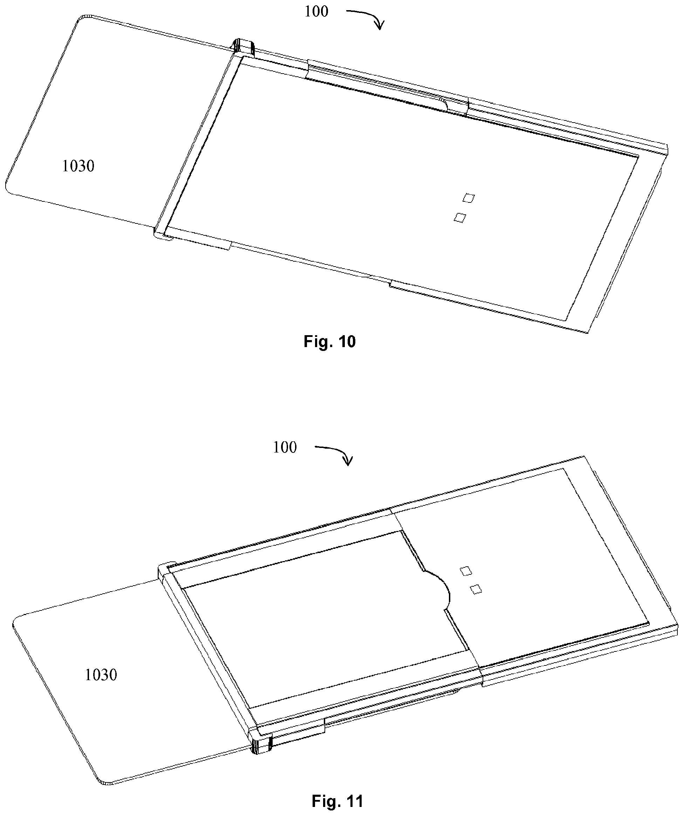

In embodiments where the chip card reader is a Smartcard reader, part of the height of the conditional access module is taken up by the Smartcard slot, which is generally around 0.8mm in height. Consequently, the USB CAM (chip card reader) must be thinner by about this amount in order for the conditional access module to be inserted into a common interface or PCMCIA slot. A standard USB plug may still be used since the Smartcard will not be inserted into the slot beyond the level of the plug (see Figs. 10 and 11). In these embodiments the Smartcard will protrude very slightly from the PCMCIA slot when the conditional access module is inserted, but this is not a problem and is certainly a much preferred arrangement over having the whole of the conditional access module protruding from the slot. It is worth noting that it is even planned for a part of certain conditional access modules, the part known as the "extension region", to protrude from the PCMCIA slot when inserted, thereby protecting or otherwise covering the protruding part of the Smartcard (see prior art section EP 2,420,953 A1). A PCMCIA slot is an elongated slot in a host device for receiving and contacting to a conditional access module as described herein. A Smartcard slot is an elongated slot in the conditional access module for receiving a Smartcard. Connectivity between the Smartcard's chip and the chip card reader of the conditional access module is provided within the Smartcard slot, preferably using resilient contacts urged against the pads of the chip when the Smartcard is pushed into the Smartcard slot.

Generally, enough support is provided by the front cover, the socket (into which the plug (USB) is inserted) and the inner guide rails (123) through which the chip card reader may slide, to hold the chip card reader firmly in the reception frame thereby providing a sturdy conditional access module having the same outer dimensions and format as a standard common interface CAM (PCMCIA format) such that the USB CAM with its reception frame may be conveniently inserted into the standard common interface slot. Any other convenient locking systems may also be used for contributing towards a solid connection between the USB CAM and the frame. The front cover can be said to form part of the reception frame. As such it can be said that the reception frame in embodiments such as the one depicted in Fig.1 entirely encloses the chip card reader.

## Claims

1. A conditional access module (100) for providing secure access to conditional access digital media content when connected to a suitable host device, the conditional access module (100) being connectable to the host device via an elongated slot in the host device, the slot having an open end and a closed end having a Common Interface socket, the conditional access module (100) comprising:
a host interface plug (101) at a first end for connecting to the corresponding interface socket located at the closed end of the elongated slot in the host device, the host interface plug (101) being compatible with a Common Interface protocol;
a chip card reader (110) configured to read a removable secure element (1030, 15111) in order to authorise said secure access; and
a reception frame (120) configured to receive and at least partially enclose the chip card reader (110) and the removable secure element (1030, 15111);
the conditional access module (100) being so dimensioned as to allow it to be inserted into the elongated slot of the host device;
**characterised in that**:
the chip card reader (110) comprises a plug (111) of a type which is compatible with a communication protocol which is different from the Common Interface protocol; and
the reception frame (120) is removable from the chip card reader and comprises:
a socket (121) configured to receive the plug (111) comprised in the chip card reader (110); and
a conversion module (628) to convert the signals from the plug (111) of the chip card reader (110) to a format compatible with the Common Interface protocol, thereby providing signals to the host interface plug in a manner which is compatible with the Common Interface protocol;
said host interface plug (101) being part of the reception frame (120).

2. The conditional access module (100) according to claim 1, wherein the removable secure element (15111) is a SIM Card;
the reception frame (120) further comprising a removable end cover (102) to hold the chip card reader (110) in place when inserted into the reception frame (120); and
the chip card reader (110) further comprising:
a top cover (17112) comprising metal;
a SIM Card reader (919) having connections for reading the SIM Card (15111); and
a removable bottom cover (1519) comprising plastic, the bottom cover comprising a recess (15110) for the SIM Card (15111).

3. The conditional access module (100) according to either of claims 1 or 2, wherein the removable secure element is a SIM Card;
the reception frame (120) further comprising a removable end cover (102, 402) to hold the chip card reader (110) in place when inserted into the reception frame (120); and
the conditional access module (100) further comprising:
a top cover (17112) comprising metal; and
a SIM Card reader (516) having connections for reading the SIM card (15111), the SIM Card reader (516) being accessible via a slot (215) at a second end of the chip card reader (110) for receiving the SIM Card;

4. The conditional access module (110) according to claim 3, wherein the removable secure element is a SIM Card (15111);
the removable end cover (402) comprising a slot (405) corresponding to the slot (215) in the chip card reader (110), through which the SIM Card may be inserted.

5. The conditional access module (100) according to claim 1, wherein the removable secure element (1030) is a Smart Card (1030) having a first width, the conditional access module (100) having at most the first width at the first end of the conditional access module (100) and a second width, more than the first width, at a second end of the conditional access module, the conditional access module comprising a bottom case comprising metal, the chip card reader further comprising:
a top cover comprising metal; and
a Smart Card reader having connections for reading the Smart Card;
the conditional access module further comprising an end cover (702) comprising:
a tongue (708) cooperating with a corresponding groove (718) in a second end of the chip card reader for holding the chip card reader within the conditional access module in a position which allows the Smart Card to be slid between the chip card reader and the bottom case of the conditional access module; and
a set of lateral guides (1203) at the second end of the chip card reader for guiding at least part of the Smart Card through the conditional access module.

6. The conditional access module according to any of the preceding claims, wherein the host interface plug (101) is a plug compliant with a PCMCIA standard.

7. The conditional access module according to any of the preceding claims, wherein the plug (111), comprised on the chip card reader (110), is a USB plug which is compatible with a USB protocol.

8. The conditional access module according to any of the preceding claims, wherein it is configured to provide electromagnetic shielding to the secure element, the reception frame comprising metallic top and bottom covers.

9. A reception frame (120) for use in a conditional access module (100) according to any of claims 1 to 8, the reception frame (120) configured to receive and at least partially enclose a chip card reader (110) and a removable secure element (1030, 15111), the reception frame (120) comprising:
a host interface plug (101) at a first end, the host interface plug (101) being compatible with a Common Interface protocol;
a socket (121) to receive the chip card reader plug (111); and
a conversion module (628) to convert signals from the card reader plug (111) to a format compatible with the Common Interface protocol;
wherein the reception frame (120) has an elongated form allowing the reception frame (120) to be received in an elongated slot of a host device, the elongated slot having an open end and a closed end, the reception frame (120) being configured such that the host interface plug (101) is connectable to a compatible socket at the closed end of the elongated slot of the host device.

10. The reception frame (120) according to claim 9, the reception frame (120) having a metallic bottom cover covering a bottom face and a metallic top cover at least partially covering a top face such that the chip card reader (110), when inserted into the reception frame (120), occupies an area left free by the top cover, the socket (121) for receiving the chip card reader plug (111) being situated part way along the length if the reception frame (120) and opposite the host interface plug (101).

11. The reception frame (120) according to either of claims 9 or 10, wherein the socket (121) for receiving the chip card reader plug is compatible with a USB protocol.

## Patentansprüche

1. Zugangsberechtigungsmodul (100) zur Bereitstellung von sicherem Zugriff auf zugangskontrollierte digitale Medieninhalte, wenn es mit einem geeigneten Host-Gerät verbunden ist, wobei das Zugangsberechtigungsmodul (100) mit dem Host-Gerät über einen verlängerten Schlitz in dem Host-Gerät verbindbar ist, wobei der Schlitz ein offenes Ende und ein geschlossenes Ende hat mit einer gemeinsamen Schnittstellenbuchse, wobei das Zugangsberechtigungsmodul (100) folgendes umfasst:
einen Host-Schnittstellenstecker (101) an einem ersten Ende zur Verbindung mit einer entsprechenden Schnittstellenbuchse, die an dem geschlossenen Ende des verlängerten Schlitzes in dem Host-Gerät positioniert ist, wobei der Host-Schnittstellenstecker (101) mit einem ersten Kommunikationsprotokoll kompatibel ist;
ein Chipkartenlesegerät (110), das konfiguriert ist, um ein entfernbares sicheres Element (1030, 15111) zu lesen, um besagten sicheren Zugang zu genehmigen; und
einen Empfangsrahmen (120), der konfiguriert ist, um das Chipkartenlesegerät (110) und das entfernbare sichere Element (1030, 155111) zu empfangen und zumindest teilweise zu umfassen;
wobei das Zugangsberechtigungsmodul (100) so dimensioniert ist, dass es in den verlängerten Schlitz des Host-Geräts eingefügt werden kann;
**gekennzeichnet dadurch, dass**:
das Chipkartenlesegerät (110) einen Stecker (111) einer Art umfasst, die mit einem Kommunikationsprotokoll kompatibel ist, das sich vom Gemeinsamen Schnittstellenprotokoll unterscheidet; und
der Empfangsrahmen (120) ist aus dem Chipkartenlesegerät entfernbar ist und folgendes umfasst:
eine Steckdose (121), um den Stecker (111) in dem Chipkartenlesegerät (110) aufzunehmen; und
ein Konvertierungsmodul (628), um die Signale von dem Stecker (111) des Chiplesegeräts (110) in ein Format zu konvertieren, das mit dem gemeinsamen Schnittstellenprotokoll kompatibel ist, zwecks Bereitstellung von Signale für den Host-Schnittstellenstecker auf eine Art, die mit dem Gemeinsamen Schnittstellenprotokoll kompatibel ist;
wobei der Host-Schnittstellenstecker (101) Teil des Empfangsrahmens (120) ist.

2. Zugangsberechtigungsmodul (100) nach Anspruch 1, wobei das entfernbare sichere Element (15111) eine SIM-Karte ist;
wobei der Empfangsrahmen (120) des Weiteren eine entfernbare Endabdeckung (102) umfasst, um das Chipkartenlesegerät (110) an Ort und Stelle zu halten, wenn es in den Empfangsrahmen (120) eingefügt wird; und
wobei das Chipkartenlesegerät (110) des Weiteren folgendes umfasst:
eine obere Abdeckung (17112) mit Metall;
ein SIM-Kartenlesegerät (919) mit Anschlüssen, um die SIM-Karte (15111) zu lesen; und
eine entfernbare Bodenabdeckung (1519) mit Kunststoff, die eine Aussparung (15110) für die SIM-Karte (15111) umfasst.

3. Zugangsberechtigungsmodul (100) nach einem beliebigen der Ansprüche 1 oder 2,
wobei das entfernbare sichere Element eine SIM-Karte ist;
wobei der Empfangsrahmen (120) des Weiteren eine entfernbare Endabdeckung (102, 402) umfasst, um das Chipkartenlesegerät (110) an Ort und Stelle zu halten, wenn es in den Empfangsrahmen (120) eingefügt wird; und
das Zugangsberechtigungsmodul (100) des Weiteren folgendes umfasst:
eine obere Abdeckung (17112) mit Metall; und
ein SIM-Kartenlesegerät (516) mit Anschlüssen, um die SIM-Karte (15111) zu lesen, wobei das SIM-Kartenlesegerät (516) mittels eines Schlitzes (215) an einem zweiten Ende des Chipkartenlesegeräts (110) zur Aufnahme der SIM-Karte zugänglich ist;

4. Zugangsberechtigungsmodul (110) nach Anspruch 3, wobei das entfernbare sichere Element eine SIM-Karte (15111) ist;
wobei die entfernbare Endabdeckung (402) einen Schlitz (405) umfasst, der dem Schlitz (215) in dem Chipkartenlesegerät (110) entspricht, durch den die SIM-Karte eingefügt werden kann.

5. Zugangsberechtigungsmodul (100) nach Anspruch 1, wobei das entfernbare sichere Element (1030) eine Smartcard (1030) mit einer erste Breite ist, wobei das Zugangsberechtigungsmodul (100) höchstens die erste Breite an dem ersten Ende des Zugangsberechtigungsmoduls (100) aufweist sowie eine zweite Breite, die breiter als die erste Breite ist, an einem zweiten Ende des Zugangsberechtigungsmoduls, wobei das Zugangsberechtigungsmodul ein Bodengehäuse mit Metall umfasst und das Chipkartenlesegerät des Weiteren folgendes umfasst:
eine obere Abdeckung mit Metall; und
ein Smartcard-Lesegerät mit Anschlüssen, um die Smartcard zu lesen;
wobei das Zugangsberechtigungsmodul des Weiteren eine Endabdeckung (702) umfasst mit:
einer Zunge (708), die mit einer entsprechenden Rille (718) an einem zweiten Ende des Chipkartenlesegeräts zusammenarbeitet, um das Chipkartenlesegerät innerhalb des Zugangsberechtigungsmoduls in einer Position zu halten, die es der Smartcard gestattet, zwischen dem Chipkartenlesegerät und dem Bodengehäuse des Zugangsberechtigungsmoduls zu gleiten; und
einem Satz seitlicher Führungen (1203) an dem zweiten Ende des Chipkartenlesegeräts, um mindestens einen Teil der Smartcard durch das Zugangsberechtigungsmodul zu führen.

6. Zugangsberechtigungsmodul nach einem beliebigen der vorherigen Patentansprüche, wobei der Host-Schnittstellenstecker (101) mit einem PCMCIA-Standard kompatibel ist.

7. Zugangsberechtigungsmodul nach einem beliebigen der vorherigen Patentansprüche, wobei der Stecker (111) auf dem Chipkartenlesegerät (110) ein USB-Stecker ist, der mit einem USB-Protokoll kompatibel ist.

8. Zugangsberechtigungsmodul nach einem beliebigen der vorherigen Patentansprüche, das zur elektromagnetischen Abschirmung des sicheren Elements konfiguriert ist, wobei der Empfangsrahmen metallische obere und Boden-Abdeckungen umfasst.

9. Empfangsrahmen (120) zum Einsatz in einem Zugangsberechtigungsmodul (100) nach einem beliebigen der Ansprüche 1 bis 8, wobei der Empfangsrahmen (120) konfiguriert ist, um ein Chipkartenlesegerät (110) und ein entfernbares sicheres Element (1030, 15111) aufzunehmen und zumindest teilweise zu umfassen, wobei der Empfangsrahmen (120) folgendes umfasst:
einen Host-Schnittstellenstecker (101) an einem ersten Ende, der mit einem gemeinsamen Schnittstellenprotokoll kompatibel ist;
eine Steckdose (121) für den Chipkartenlesegerätstecker (111); und
ein Konvertierungsmodul (628), um Signale von dem Kartenlesegerätstecker (111) in ein Format zu konvertieren, das mit dem gemeinsamen Schnittstellenprotokoll kompatibel ist;
wobei der Empfangsrahmen (120) eine verlängerte Form hat, so dass er in einen verlängerten Schlitz eines Host-Geräts passt, wobei der verlängerte Schlitz ein offenes Ende und ein geschlossenes Ende hat und der Empfangsrahmen (120) derart konfiguriert ist, dass der Host-Schnittstellenstecker (101) mit einer kompatiblen Steckdose an dem geschlossenen Ende des verlängerten Schlitzes des Host-Geräts verbindbar ist.

10. Empfangsrahmen (120) nach Anspruch 9, mit einer metallischen Bodenabdeckung, die eine Bodenseite abdeckt, und einer metallischen oberen Abdeckung, die zumindest teilweise eine Oberseite abdeckt, so dass das Chipkartenlesegerät (110), wenn es in den Empfangsrahmen (120) eingefügt ist, einen Bereich einnimmt, der von der oberen Abdeckung freigelassen wurde, wobei die Steckdose (121) zur Aufnahme des Chipkartenlesegerätsteckers (111) sich teilweise entlang der Länge des Empfangsrahmens (120) und gegenüber dem Host-Schnittstellenstecker (101) befindet.

11. Empfangsrahmen (120) nach einem beliebigen der Ansprüche 9 oder 10, wobei die Steckdose (121) zur Aufnahme des Chipkartenlesegerätsteckers mit einem USB-Protokoll kompatibel ist.

## Revendications

1. Module d'accès conditionnel (100) pour fournir un accès sécurisé à un contenu multimédia numérique à accès conditionnel lorsqu'il est connecté à un dispositif hôte approprié, le module d'accès conditionnel (100) étant connectable au dispositif hôte par une fente allongée dans le dispositif hôte, la fente ayant une extrémité ouverte et une extrémité fermée ayant un port Interface Commune, le module d'accès conditionnel (100) comprenant:
un connecteur mâle d'interface hôte (101) à une première extrémité pour la connexion à un port d'interface correspondant situé à l'extrémité fermée de la fente allongée dans le dispositif hôte, le connecteur mâle d'interface hôte (101) étant compatible avec un premier protocole de communication;
un lecteur de carte à puce (110) configuré pour lire un élément sécurisé amovible (1030, 15111) afin d'autoriser ledit accès sécurisé; et
un cadre de réception (120) configuré pour recevoir et entourer au moins partiellement le lecteur de carte à puce (110) et l'élément sécurisé amovible (1030, 155111);
le module d'accès conditionnel (100) étant dimensionné de manière à permettre son insertion dans la fente allongée du dispositif hôte;
**caractérisé en ce que**:
le lecteur de carte à puce (110) comprend un connecteur mâle (111) d'un type qui est compatible avec un protocole de communication qui est différent du protocole d'Interface Commune; et
le cadre de réception (120) est amovible du lecteur de carte à puce et comprend:
un port (121) configuré pour recevoir le connecteur mâle (111) compris dans le lecteur de carte à puce (110); et
un module de conversion (628) pour convertir les signaux du connecteur mâle (111) du lecteur de puce (110) en un format compatible avec le protocole d'Interface commune, fournissant ainsi des signaux au connecteur mâle d'Interface hôte d'une manière compatible avec le protocole d'Interface Commune;
ledit connecteur mâle d'interface hôte (101) faisant partie du cadre de réception (120).

2. Module d'accès conditionnel (100) selon la revendication 1, où l'élément sécurisé amovible (15111) est une carte SIM;
le cadre de réception (120) comprenant en outre un couvercle d'extrémité amovible (102) pour maintenir le lecteur de carte à puce (110) en place lorsqu'il est inséré dans le cadre de réception (120); et
le lecteur de carte à puce (110) comprenant en outre:
un couvercle supérieur (17112) comprenant du métal;
un lecteur de carte SIM (919) ayant des connexions pour lire la carte SIM (15111); et
un couvercle inférieur amovible (1519) comprenant du plastique, le couvercle inférieur comprenant un enfoncement (15110) pour la carte SIM (15111).

3. Module d'accès conditionnel (100) selon l'une quelconque des revendications 1 ou 2, où l'élément sécurisé amovible est une carte SIM;
le cadre de réception (120) comprenant en outre un couvercle d'extrémité amovible (102, 402) pour maintenir le lecteur de carte à puce (110) en place lorsqu'il est inséré dans le cadre de réception (120); et
le module d'accès conditionnel (100) comprenant en outre:
un couvercle supérieur (17112) comprenant du métal;
un lecteur de carte SIM (516) ayant des connexions pour lire la carte SIM (15111), le lecteur de carte SIM (516) étant accessible par une fente (215) à une deuxième extrémité du lecteur de carte à puce (110) pour recevoir la carte SIM;

4. Module d'accès conditionnel (110) selon la revendication 3, où l'élément sécurisé amovible est une carte SIM (15111);
le couvercle d'extrémité amovible (402) comprenant une fente (405) qui correspond à la fente (215) dans le lecteur de carte à puce (110), à travers laquelle la carte SIM peut être insérée.

5. Module d'accès conditionnel (100) selon la revendication 1, où l'élément sécurisé amovible (1030) est une carte à puce (1030) ayant une première largeur, le module d'accès conditionnel (100) ayant au plus la première largeur à la première extrémité du module d'accès conditionnel (100) et une deuxième largeur, supérieure à la première largeur, à une deuxième extrémité du module d'accès conditionnel, le module d'accès conditionnel comprenant un boîtier inférieur comprenant du métal, le lecteur de carte à puce comprenant en outre:
un couvercle supérieur comprenant du métal; et
un lecteur de carte à puce ayant des connexions pour lire la carte à puce;
le module d'accès conditionnel comprenant en outre un couvercle d'extrémité (702) comprenant:
une languette (708) qui coopère avec une rainure correspondante (718) dans une deuxième extrémité du lecteur de carte à puce pour maintenir le lecteur de carte à puce dans le module d'accès conditionnel dans une position qui permet à la carte à puce d'être glissée entre le lecteur de carte à puce et le boîtier inférieur du module d'accès conditionnel; et
un ensemble de guides latérales (1203) à la deuxième extrémité du lecteur de carte à puce pour guider au moins une partie de la carte à puce à travers le module d'accès conditionnel.

6. Module d'accès conditionnel selon l'une quelconque des revendications précédentes, où le connecteur mâle d'interface hôte (101) est un connecteur mâle conforme à un standard PCMCIA.

7. Module d'accès conditionnel selon l'une quelconque des revendications précédentes, où le connecteur mâle (111), compris sur le lecteur de carte à puce (110), est un connecteur mâle USB qui est compatible avec un protocole USB.

8. Module d'accès conditionnel selon l'une quelconque des revendications précédentes, où il est configuré pour fournir une protection électromagnétique à l'élément sécurisé, le cadre de réception comprenant des couvercles supérieur et inférieur métalliques.

9. Cadre de réception (120) pour l'utilisation dans un module d'accès conditionnel (100) selon l'une quelconque des revendications 1 à 8, le cadre de réception (120) étant configuré pour recevoir et entourer au moins partiellement un lecteur de carte à puce (110) et un élément sécurisé amovible (1030, 15111), le cadre de réception (120) comprenant:
un connecteur mâle d'interface hôte (101) à une première extrémité, le connecteur mâle d'interface hôte (101) étant compatible avec un protocole d'Interface Commune;
un port (121) pour recevoir le connecteur mâle du lecteur de carte à puce (111); et
un module de conversion (628) pour convertir les signaux du connecteur mâle du lecteur de carte (111) en un format compatible avec le protocole d'Interface Commune;
où le cadre de réception (120) a une forme allongée qui permet au cadre de réception (120) d'être reçu dans une fente allongée d'un dispositif hôte, la fente allongée ayant une extrémité ouverte et une extrémité fermée, le cadre de réception (120) étant configuré de manière que le connecteur mâle d'interface hôte (101) soit connectable à un port compatible à l'extrémité fermée de la fente allongée du dispositif hôte.

10. Cadre de réception (120) selon la revendication 9, le cadre de réception (120) ayant un couvercle inférieur métallique couvrant une face inférieure et un couvercle supérieur métallique couvrant au moins partiellement une face supérieure de manière que le lecteur de carte à puce (110), lorsqu'il est inséré dans le cadre de réception (120), occupe une zone laissée libre par le couvercle supérieur, le port (121) pour recevoir le connecteur mâle du lecteur de carte à puce (111) étant situé partiellement sur la longueur du cadre de réception (120) et en face du connecteur mâle d'interface hôte (101).

11. Cadre de réception (120) selon l'une quelconque des revendications 9 ou 10, où le port (121) pour recevoir le connecteur mâle du lecteur de carte à puce est compatible avec un protocole USB.
